# EUROPEAN PATENT APPLICATION

(11) **EP 4 635 661 A1**
(43) Date of publication of application: **22.10.2025**
(21) Application number: 24170635.7
(22) Date of filing: 16.04.2024
(51) Int. Cl.: B23D 61/02, B24D 5/12, B23D 65/00

(54) **CUTTING DISK WITH PLASTIC INLAYS**

(71) Applicant: Hilti Aktiengesellschaft, 9494 Schaan (LI)
(72) Inventor: Kumar, Manish, 9486 Schaanwald (LI); Bartholomee, Ward, 89231 Neu-Ulm (DE); Hoop, Matthaeus, 9492 Eschen (LI); Granitzer, Thomas, 89278 Nersingen (DE)
(74) Representative: Hilti Aktiengesellschaft Corporate Intellectual Property

(57) **Abstract**

A cutting disk (30) configured to be connected to a power tool, comprising a metal disk (31) including an arbor hole (33) configured to be connected to the power tool, a plurality of cutting elements (32) connected to the metal disk (31), and a plurality of apertures arranged in the metal disk (31), wherein the apertures are filled with plastic inlays (35.1, 35.2, 35.3, 35.4, 35.5, 35.6, 35.7), which are connected to the metal disk (31).

## Description

### Technical field

The present invention relates to a cutting disk configured to be connected to a power tool according to the definition of claim 1.

### Background of the invention

WO 2021/204765 A1 discloses a cutting disk that is configured to be connected to a power tool. The cutting disk comprises a metal disk, a plurality of cutting elements connected to the metal disk, and an arbor hole configured to be connected to the power tool. To reduce the weight of the cutting disk, panels have been removed from the metal disk to leave apertures which extend through the thickness of the metal disk. The pattern of these apertures maintains structural strength whilst reducing the weight of the whole cutting disk.

To support health and safety, an operator should be protected from the effects of noise and/or vibration. Noise information and vibration values can be measured in accordance with a standardized test in accordance with EN 60745-1:2009 and EN 60745-2-22:2011. There is a need for cutting disks having a reduced noise level compared to the cutting disks known from WO 2021/204765 A1.

### Summary of the invention

The present invention has been made with the above-described background in mind, and it is, therefore, an object of the present invention to provide a weight-reduced cutting disk with a reduced noise level during cutting.

These objectives are achieved by realizing the features of the independent claims. Features which further develop the invention in an advantageous manner are described in the dependent claims.

According to an aspect of the invention, there is provided a cutting disk configured to be connected to a power tool, the cutting disk comprising a metal disk including an arbor hole configured to be connected to the power tool, a plurality of cutting elements connected to the metal disk, and a plurality of apertures arranged in the metal disk, characterized in that the apertures are filled with plastic inlays, which are connected to the metal disk.

Filling the apertures with plastic inlays allows to reduce the noise level that is caused during cutting with cutting disks according to the present invention. The apertures allow to reduce the weight of the cutting disk, and the plastic inlays allow to reduce the noise level that is caused by the cutting disk during cutting.

The density of steel, which is commonly used to form the metal disc for cutting discs, is nearly seven times higher than for plastic materials. The inherent difference in the densities of steel and plastic is the main reason to fill the apertures in the metal disk with plastic inlays. Due to the discontinuity, unfilled apertures can marginally break sound waves generated during cutting, but the sound waves can still travel through the continuous part of the metal disc. By filling the apertures with plastic inlays, the energy of the sound waves is absorbed in the deformation of the plastic inlays, attributed to lower density, and thus leading to lower noise generation compared to cutting discs with unfilled apertures known from prior art.

The plastic inlays, which fill the apertures, can be made of any type of plastic material. The plastic material will be adapted to the application of the cutting disk and the specific requirements. Due to their well-known properties, plastic materials made of polyamides (PA), particularly made of fiber-reinforced polyamides, are preferred to be used as the plastic inlays. The form and the pattern of the apertures and of the plastic inlays will be adapted to the application of the cutting disk and the specific requirements.

The concept of the (hybrid) cutting disk according to the present invention can be used in combination with any metal disk, any arbor hole, any type of cutting element, and any type of connection between the cutting element and the metal disk. The metal disk is necessary if cutting elements, such as sintered cutting segments including abrasive particles, should be connected by welding.

In a preferred embodiment, the apertures are encased by border strips having a thickness smaller than the thickness of the metal disk. Border strips, which encase the apertures and have a thickness smaller than the thickness of the metal disk, allow to fill the apertures without any protrusion of the plastic inlays with respect to the metal disk. If the plastic inlay would protrude with respect to the metal disk, the plastic inlay would be abraded during cutting as long as the plastic inlay fits with the width of the cutting elements.

Preferably, the border strips include one or more interlocking elements. The interlocking elements in the border strips allow a strong connection between the plastic inlays and the metal disk. The form and the pattern of the interlocking elements will be adapted to the application of the cutting disk and the specific requirements. The interlocking elements can be formed as clearance holes having the same thickness as the border strips and/or as blind holes having a reduced thickness compared to the border strips.

Preferably, the interlocking elements are formed as clearance holes. Interlocking elements formed as clearance holes having the same thickness as the border strips allow a strong connection between the plastic inlays and the metal disk. The form and the pattern of the clearance holes will be adapted to the application of the cutting disk and the specific requirements.

In a preferred embodiment, the plastic inlays are made from polyamides. Using polyamides to create the plastic inlays that fill the apertures allows to reduce the noise level that is caused during cutting with cutting disks according to the present invention. Polyamides have high strength and stiffness, excellent impact resistance and good abrasion and wear resistance. Due to their properties, polyamides are qualified to fill the apertures and to connect the plastic inlays with the metal disk.

Preferably, the plastic inlays are made from fiber-reinforced polyamides. Using fiber-reinforced polyamides to create the plastic inlays that fill the apertures allows to reduce the noise level that is caused during cutting with cutting disks according to the present invention. By reinforcing polyamides with fibers, properties of the polyamides, such as strength, elastic modulus, and continuous operating temperature, can increase. Due to their properties, fiber-reinforced polyamides are qualified to fill the apertures and to connect the plastic inlays with the metal disk.

In a preferred embodiment, the plastic inlays are connected to the metal disk via over-molding or potting. Connecting the plastic inlays to the metal disk via over-molding or potting allows to create a strong connection between the plastic inlays and the metal disk. Preferably, the plastic inlays and the connection of the plastic inlays and the metal disk can be manufactured via injection molding.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIGS. 1A, B: show a power tool formed as cut-off saw that is connected to a cutting disk in a connected state (FIG. 1A) and in an unconnected state (FIG. 1B) of the cutting disk,
- FIGS. 2A, B: show a first embodiment of a cutting disk according to the present invention, the cutting disk including a plurality of apertures filled with plastic inlays,
- FIGS. 3A, B: show in detail a plastic inlay (FIG. 3A) and an aperture (FIG. 3B) that is configured to be filled with the plastic inlay used with the cutting disk of FIG. 2,
- FIGS. 4A, B: show a second embodiment of a cutting disk according to the present invention, the cutting disk including a plurality of apertures filled with plastic inlays,
- FIGS. 5A, B: show in detail a plastic inlay (FIG. 5A) and an aperture (FIG. 5B) that is configured to be filled with the plastic inlay used with the cutting disk of FIG. 4, and
- FIG. 6: shows in detail the cutting disk of FIG. 4B in a cross-section, one of the apertures being encased by a border strip that includes an interlocking element arranged in the border strip.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

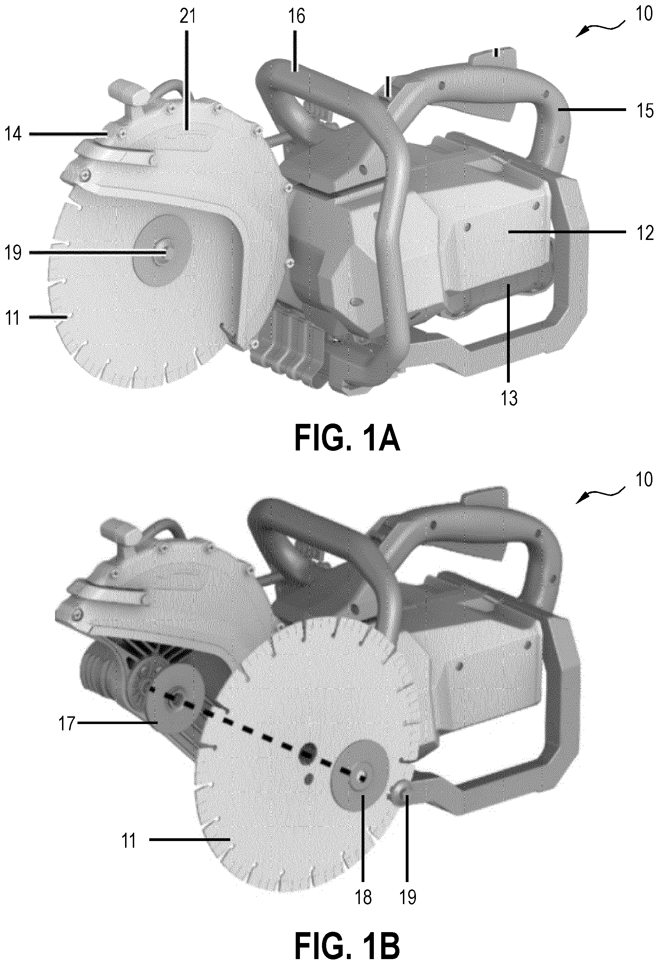

**FIGS. 1A****, B** show a power tool **10** and a cutting disk **11** that is connected to the power tool 10. The power tool 10 is a handheld cordless cut-off saw that is designed for cutting applications (indoor and outdoor, wet and dry) of mineral or metallic construction materials and asphalt with abrasive cut-off wheels or diamond cut-off wheels.

The term "power tool" refers to mains-operated (corded) power tools, battery-operated (cordless) power tools, and any other type of power tools, such as gas- or petrol-driven power tools. The term "cutting disk" refers to all disk-shaped tool inserts designed for cutting applications, such as diamond cut-off wheels in accordance with EN 13236, abrasive cut-off wheels, and bonded reinforced cut-off wheels in accordance with ISO 603-15 and ISO 603-16.

The cut-off saw 10 comprises a motor housing **12** with an electric motor (not shown), a battery pack **13,** and a guard **14.** The cutting disk 11 is surrounded by the guard 14, which serves to protect the operator from flying dust particles and reduces the risk of injury posed by the operator reaching into the rotating cutting disk 11. For operating the cut-off saw 10, the cut-off saw 10 must be hold securely with both hands on the defined grips, a main grip **15** and a front grip **16.**

FIG. 1A shows the cut-off saw 10 with the cutting disk 11 connected to the power tool, and FIG. 1B shows in detail how the cutting disk 11 can be connected to the cut-off saw 10. The cutting disk 11 is connected to the cut-off saw 10 via a mounting flange **17,** a clamping flange **18,** and a securing screw **19.** The cutting disk 11 is positioned flush and centered on the mounting flange 17, wherein the direction of rotation of the cutting disk 11 must match a direction-of-rotation arrow **21.** The clamping flange 18 is positioned flush and centered and the securing screw 19 is installed with an assembly tool.

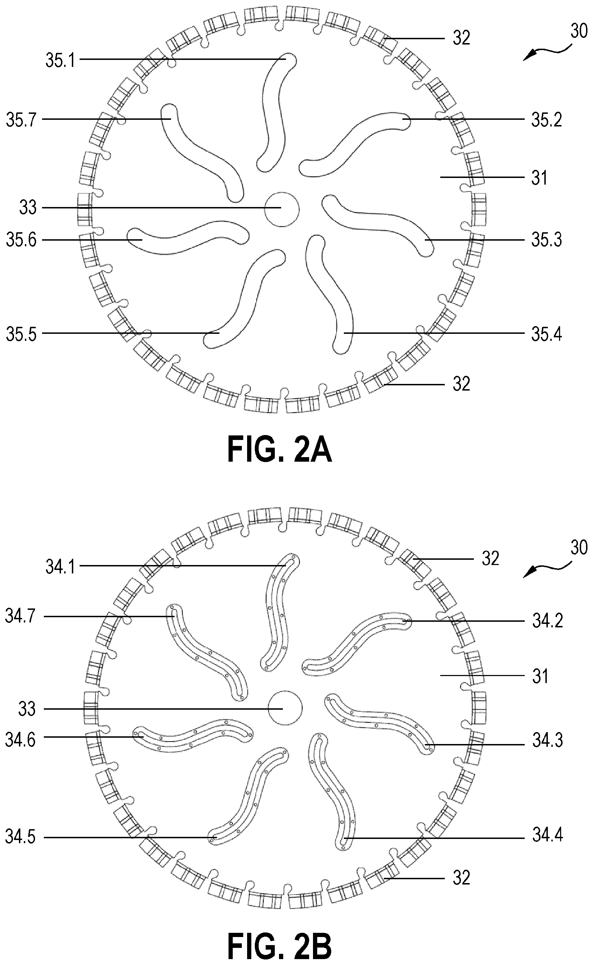

**FIGS. 2A****, B** show a first embodiment of a cutting disk **30** according to the present invention configured to be connected to a power tool, such as the cut-off saw 10 shown in FIGS. 1A, B. The cutting disk 30 can substitute the cutting disk 11 of the cut-off saw 10.

The cutting disk 30 comprises a metal disk **31,** a plurality of cutting elements **32** connected to the metal disk 31, an arbor hole **33,** a plurality of apertures **34.1, 34.2, 34.3, 34.4, 34.5, 34.6, 34.7,** and a plurality of plastic inlays **35.1, 35.2, 35.3, 35.4, 35.5, 35.6, 35.7** which fill the apertures 34.1-34.7. FIG. 2A shows the cutting disk 30 with the plastic inlays 35.1 to 35.7, and FIG. 2B shows the cutting disk 30 without the plastic inlays 35.1-35.7.

FIG. 2A shows an exemplary version of the cutting disk 30 including a number of seven plastic inlays 35.1 to 35.7. The plastic inlays 35.1 to 35.7 are formed as sunrays and equi-angularly arranged around the arbor hole 33. The equi-angularly arrangement of the plastic inlays 35.1 to 35.7 supports balancing of the mass of the cutting disk 30 and avoiding imbalances. The number, the form, and the pattern of the apertures 34.1 to 34.7 and the plastic inlays 35.1 to 35.7 will be adapted to the application of the cutting disk 30 and the specific requirements.

The plastic inlays 35.1 to 35.7, which fill the apertures 34.1 to 34.7, can be made of any type of plastic material. Due to their well-known properties, plastic materials formed as polyamides (PA), particularly formed as fiber-reinforced polyamides, are preferred to be used as the plastic inlays 35.1 to 35.7. Polyamides have high strength and stiffness, excellent impact resistance and good abrasion and wear resistance; the most important industrial representatives include the polyamide types of PA 6 and PA 66.

The apertures 34.1 to 34.7 are encased by border strips. The border strips include a plurality of interlocking elements. In the exemplary version of FIG. 2B, the interlocking elements are formed as clearance holes which allow a strong connection between the plastic inlays 35.1 to 35.7 and the metal disk 31. The form of the clearance holes and pattern of the clearance holes can be adapted to the application of the cutting disk 30 and the specific requirements.

In the exemplary version of FIG. 2, the metal disk 31 comprises a generally circular body and the plurality of cutting elements 32 is arranged peripherally around a circular outer circumference of the metal disk 31. The metal disk 31 does not need to be generally circular, it may be hexagonal, octagonal, decagonal, or indeed have any number of circumferentially extending sides. The metal disk 31 is typically made from steel, but any type of metal or any combination of metals can be used.

In the exemplary version, the arbor hole 33 comprises a generally circular form. The arbor hole 33 does not need to be generally circular, it may be hexagonal, octagonal, decagonal, or indeed have any number of circumferentially extending sides. The arbor hole 33 is configured to be connected to the power tool, such as the cut-off-saw 10, and the form of the arbor hole 33 is adapted to a spindle of the power tool.

In the exemplary version, the cutting elements 32 are formed as cutting segments composed of a sintered matrix material and a plurality of abrasive particles and are equi-angularly spaced around the outer circumference of the metal disk 31. The cutting segments 32 are connected to the metal disk 31 by welding or brazing; alternatively, the cutting segments may be connected to the metal disk in a releasable manner, such as screwing. Instead of cutting segments including abrasive particles, cutting elements including PCD (polycrystalline diamond) cutters or a cutting ring can be used and connected to the metal disk 31.

The concept of the (hybrid) cutting disk according to the present invention can be used in combination with any metal disk 31, any arbor hole 33, any type of cutting element 32, and any type of connection between the cutting element 32 and the metal disk 31.

The cutting disk 30 can be manufactured by a method for manufacturing a cutting disk configured to be connected to a power tool, the cutting disk including a metal disk, a plurality of cutting elements connected to the metal disk, a plurality of apertures arranged in the metal disk, and a plurality of plastic inlays that fill the apertures, the method comprising the steps:
▪ Creating the apertures 34.1 to 34.7 in the metal disk 31,
▪ Creating border strips and interlocking elements in the metal disk 31,
▪ Connecting the cutting elements 32 to the metal disk 31,
▪ Creating the plastic inlays 35.1 to 35.7, and
▪ Connecting the plastic inlays 35.1 to 35.7 to the metal disk 31.

The method for manufacturing a cutting disk according to the present invention comprises five steps which can be performed in different order. The method can be separated in three parts: Sheet metal working, connecting the cutting elements, and plastic working.

The metal disk is prepared by creating the apertures 34.1 to 34.7 and by creating border strips and interlocking elements in the metal disk 31. The sheet metal working can be performed by laser cutting, by milling, or by any other metal working process. The sheet metal working can be performed by a specialized sheet metal worker.

The cutting elements 32 must be connected to the metal disk 31. The connecting step can be performed before the plastic working or after the plastic working. The preferred order depends on the type of connection between the cutting elements 32 and the metal disk 31. In case the cutting elements 32 should be connected by welding, it is preferred to connect the cutting elements 32 before doing the plastic working in order to avoid any thermal deformation of the plastic inlay during welding.

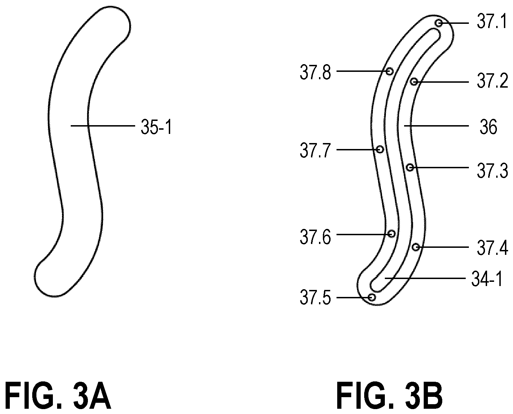

**FIGS. 3A****, B** show in detail the plastic inlay 35.1 (FIG. 3A) and the aperture 34.1 (FIG. 3B) that is configured to be filled with the plastic inlay 35.1. Since the apertures 34.1 to 34.7 have the same form, the details disclosed for the plastic inlay 35.1 and the aperture 34.1 are also valid for the plastic inlays 35.2 to 35.7 and the apertures 34.2 to 34.7.

The aperture 34.1 is encased by a border strip **36** that is formed as a recess with a reduced thickness compared to the thickness of the metal disk 31. The reduced thickness of the border strip 36 is necessary to allow that the aperture 34.1 can be filled with the plastic inlay 35.1 without any protrusion with respect to the metal disk 31.

In the border strip 36, a plurality of eight interlocking elements **37.1, 37.2, 37.3, 37.4, 37.5, 37.6, 37.7, 37.8** is arranged. The interlocking elements are formed as clearance holes 37.1 to 37.8 which allow a strong connection between the plastic inlay 35.1 and the metal disk 31.

In the exemplary version, the clearance holes 37.1 to 37.8 comprise a generally circular form. The clearance holes 37.1 to 37.8 does not need to be generally circular, they may be elliptical, hexagonal, or have any other form. The size and form of the clearance holes 37.1 to 37.8 is selected such that the plastic material can flow properly through the clearance holes. The number of the clearance holes 37.1 to 37.8 is adapted to the required strength of the cutting disk 30. In order to achieve a smooth connection of the plastic inlay 35.1 to the metal disk 31, the clearance holes 37.1 to 37.8 can be uniformly distributed over the border strip 36.

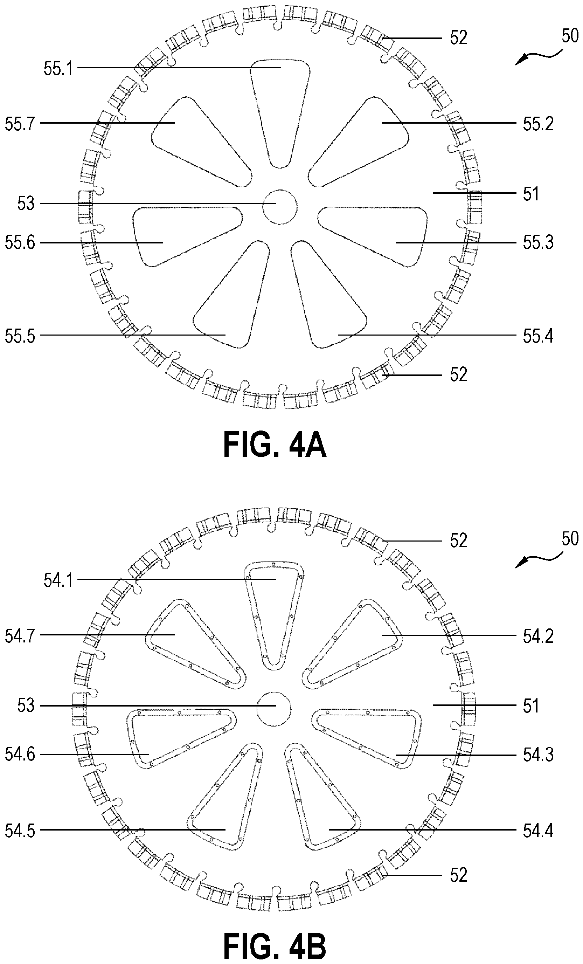

**FIGS. 4A****, B** show a second embodiment of a cutting disk **50** according to the present invention configured to be connected to a power tool, such as the cut-off saw 10 shown in FIGS. 1A, B. The cutting disk 50 can substitute the cutting disk 11 of the cut-off saw 10.

The cutting disk 50 comprises a metal disk **51,** a plurality of cutting segments **52** connected to the metal disk 51, an arbor hole **53,** a plurality of apertures **54.1, 54.2, 54.3, 54.4, 54.5, 54.6, 54.7,** and a plurality of plastic inlays **55.1, 55.2, 55.3, 55.4, 55.5, 55.6, 55.7** which fill the apertures 54.1-54.7. FIG. 4A shows the cutting disk 50 with the plastic inlays 55.1 to 55.7, and FIG. 4B shows the cutting disk 50 without the plastic inlays 55.1 to 55.7.

FIG. 4A shows an exemplary version of the cutting disk 50 including a number of seven plastic inlays 55.1 to 55.7. The plastic inlays 55.1 to 55.7 are formed as segments and equi-angularly arranged around the arbor hole 53. The equi-angularly arrangement of the plastic inlays 55.1 to 55.7 supports balancing of the mass of the cutting disk 50 and avoiding imbalances. The number, the form, and the pattern of the apertures 54.1 to 54.7 and the plastic inlays 55.1 to 55.7 will be adapted to the application of the cutting disk 50 and the specific requirements.

The plastic inlays 55.1 to 55.7 can be made of any type of plastic material. Due to their well-known properties, plastic materials formed as polyamides (PA), particularly formed as fiber-reinforced polyamides, are preferred to be used as the plastic inlays 55.1 to 55.7. Polyamides have high strength and stiffness, excellent impact resistance and good abrasion and wear resistance; the most important industrial representatives include the polyamide types of PA 6 and PA 66.

The apertures 54.1 to 54.7 are encased by border strips. The border strips include a plurality of interlocking elements. In the exemplary version of FIG. 4B, the interlocking elements are formed as clearance holes which allow a strong connection between the plastic inlays 55.1 to 55.7 and the metal disk 51. The form and pattern of the clearance holes can be adapted to the application of the cutting disk 50 and the specific requirements.

The concept of the (hybrid) cutting disk 50 can be used in combination with any metal disk 51, any arbor hole 53, any type of cutting element 52, and any type of connection between the cutting element 52 and the metal disk 51.

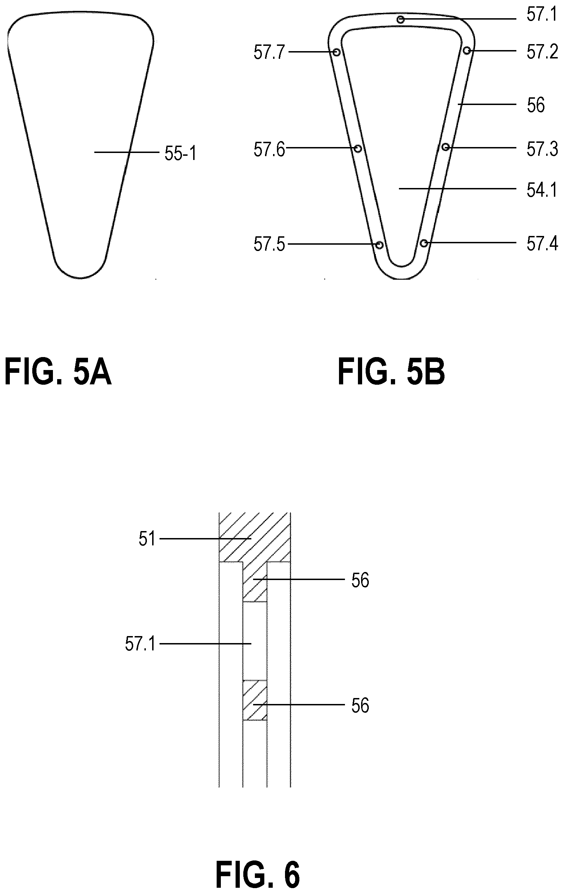

**FIGS. 5A****, B** show in detail the plastic inlay 55.1 (FIG. 5A) and the aperture 54.1 (FIG. 5B) that is configured to be filled with the plastic inlay 55.1. Since the apertures 54.1 to 54.7 have the same form, the details disclosed for the plastic inlay 55.1 and the aperture 54.1 are also valid for the plastic inlays 55.2 to 55.7 and the apertures 54.2 to 54.7.

The aperture 54.1 is encased by a border strip **56** that is formed as a recess with a reduced thickness compared to the thickness of the metal disk 51. The reduced thickness of the border strip 56 is necessary to allow that the aperture 54.1 can be filled with the plastic inlay 55.1 without any protrusion with respect to the metal disk 51.

In the border strip 56, a plurality of seven interlocking elements **57.1, 57.2, 57.3, 57.4, 57.5, 57.6, 57.7** is arranged. The interlocking elements are formed as clearance holes 57.1 to 57.7 which allow a strong connection between the plastic inlay 55.1 and the metal disk 51.

The size and form of the clearance holes 57.1 to 57.7 is selected such that the plastic material can flow properly through the clearance hole. The number of the clearance holes 57.1 to 57.7 is adapted to the required strength of the cutting disk 50. In order to achieve a smooth connection of the plastic inlay 55.1 to the metal disk 51, the clearance holes 57.1 to 57.7 can be uniformly distributed over the border strip 56.

**FIG. 6** shows in detail the cutting disk 50 of FIG. 4B in a cross-section, one of the apertures 54.1 being encased by the border strip 56 that includes an interlocking element 57.1 arranged in the border strip 56.

The aperture 54.1 is encased by the border strip 56 that is formed as a recess with a reduced thickness compared to the thickness of the metal disk 51. The reduced thickness of the border strip 56 is necessary to allow that the aperture 54.1 can be filled with the plastic inlay 55.1 without any protrusion with respect to the metal disk 51.

The border strip 56 includes a plurality of interlocking elements that are formed as clearance holes 57.1 to 57.7. FIG. 6 shows the clearance hole 57.1 in the border strip 56. The size and form of the clearance hole 57.1 is selected such that the plastic material can flow properly through the clearance hole 57.1 to connect the plastic inlay to the metal disk 51. The clearance hole 57.1 allows a strong connection between the plastic inlay 55.1 and the metal disk 51.

The plastic inlay 55.1 that fill the aperture 54.1 can be made of any type of plastic material. Due to their properties, plastic materials formed as polyamides (PA), particularly formed as fiber-reinforced polyamides, are preferred to be used as the plastic inlays.

Polyamides have high strength and stiffness, excellent impact resistance and good abrasion and wear resistance; the most important industrial representatives include the polyamide types of PA 6 and PA 66. By reinforcing polyamides with fibers, properties of the polyamides, such as strength, elastic modulus, and continuous operating temperature, can increase.

## Claims

1. A cutting disk (30; 50) configured to be connected to a power tool (10), comprising:
▪ a metal disk (31; 51) including an arbor hole (33; 53) configured to be connected to the power tool (10),
▪ a plurality of cutting elements (32; 52) connected to the metal disk (31; 51), and
▪ a plurality of apertures (34.1, 34.2, 34.3, 34.4, 34.5, 34.6, 34.7; 54.1, 54.2, 54.3, 54.4, 54.5, 54.6, 54.7) arranged in the metal disk (31; 51),
**characterized in that** the apertures (34.1-34.7; 54.1-54.7) are filled with plastic inlays (35.1, 35.2, 35.3, 35.4, 35.5, 35.6, 35.7; 55.1, 55.2, 55.3, 55.4, 55.5, 55.6, 55.7), which are connected to the metal disk (31; 51).

2. The cutting disk of claim 1, wherein the apertures (34.1-34.7; 54.1-54.7) are encased by border strips (36; 56) having a thickness smaller than the thickness of the metal disk (31; 51).

3. The cutting disk of claim 2, wherein the border strips (36; 56) include one or more interlocking elements (37.1, 37.2, 37.3, 37.4, 37.5, 37.6, 37.7, 37.8; 57.1, 57.2, 57.3, 57.4, 57.5, 57.6, 57.7).

4. The cutting disk of claim 3, wherein the interlocking elements are formed as clearance holes (37.1, 37.2, 37.3, 37.4, 37.5, 37.6, 37.7, 37.8; 57.1, 57.2, 57.3, 57.4, 57.5, 57.6, 57.7).

5. The cutting disk of any one of claims 1 to 4, wherein the plastic inlays (35.1-35.7; 55.1-55.7) are made from polyamides.

6. The cutting disk of claim 5, wherein the plastic inlays (35.1-35.7; 55.1- 55.7) are made from fiber-reinforced polyamides.

7. The cutting disk of any one of claims 1 to 6, wherein the plastic inlays (35.1-35.7; 55.1-55.7) are connected to the metal disk (31; 51) via over-molding or potting.
